# EUROPEAN PATENT APPLICATION

(11) **EP 2 743 856 A1**
(43) Date of publication of application: **18.06.2014**
(21) Application number: 13197525.2
(22) Date of filing: 16.12.2013
(51) Int. Cl.: G06F 21/10

(54) **Method and apparatus for protecting application program**

(30) Priority: 14.12.2012 KR 20120146458
(71) Applicant: Samsung Electronics Co., Ltd, Gyeonggi-do 443-742 (KR)
(72) Inventor: Hong, Jae-Mok, 443-742 Gyeonggi-do (KR); Bae, Tae-Do, 443-742 Gyeonggi-do (KR); Lee, Nam-Geol, 443-742 Gyeonggi-do (KR)
(74) Representative: Jenkins, Richard Gavin

(57) **Abstract**

A method and apparatus for protecting an application in a user digital device are provided. The method includes downloading an application module and installing an application; receiving an execution request for the application; extracting authentication information from the application module, extracting an authentication element included in the application from the application, generating an authentication signature using the authentication element; comparing a reference authentication signature included in the authentication information with the generated authentication signature; and if the reference authentication signature is identical to the generated authentication signature, normally executing the application.

## Description

### [Technical Field]

The present invention relates generally to protection of digital content, and more particularly, to a method and apparatus for protecting application programs in the Android™ environment.

### [Background Art]

In the approaching digital era, the greatest concern is how to distribute digital content over digital devices such as televisions, computers and portable devices. Several protection schemes have been proposed to protect the intellectual property rights for digital content. A Digital Rights Management (DRM) service is a common protection technology.

The DRM service is a technology for continuously managing and protecting the intellectual property rights for digital content using encryption methods. In this technology, a Content Provider (CP) securely delivers a variety of content to a user, to prevent the user from fraudulently distributing the content that he/she has received. This DRM technology may protect information throughout the whole process including creation, distribution, use and disposal of digital content, and may also protect the user's privileges and rights not only online, but also offline.

In order to play the content (hereinafter, referred to as 'DRM content'), to which the DRM technology is applied, on a user's digital device, the digital device first needs to access the system providing the DRM content, and download the DRM content, metadata for the DRM content, and a license. The metadata refers to data in which information about the DRM content is stored, and the license refers to data that specifies an encryption key used to decrypt encrypted DRM content, and access rights (for example, the number of accesses, an access period, and the like) to the content. If both the DRM content and the license have been stored through this process, the digital device may play the DRM content.

The digital content may include video files, audio files, text files, application programs and the like. In the case of the application programs, the demand for them and their marketability have expanded due to the prevalence of portable digital devices such as smart phones and tablet Personal Computers (PCs). The application programs (hereinafter, referred to as 'application' for short) may be created and executed on the Android™ platform.

The Android™ platform for applications is based on the Java programming language, and is comprised of an application framework, an application library, and Dalvik virtual machine-based runtime. Apart from the DRM technology, the Android™ platform provides its own security service, using sandbox, processes, rights, application signatures and the like.

Android™ applications are created using the Java programming language. A file with an extension of '.pak' is created by compiling Java code for an application, packaging the compiled code in an Android™ package by an 'aapt' utility existing in the Android™ Software Development Kit (SDK), and compressing the packaged code into one archive file. This file is a in which the Android™ applications are distributed and installed. In other words, the file is a file that the user finally downloads on the digital device, and enjoys it on the device. The code of one '.pak' file is considered one application.

Basically, all applications are executed in their own Linux process or sandbox. Each process or sandbox has its own Java virtual machine, so that one application is executed independently of all other applications. Each application has a unique Linux user ID. A 'permission' parameter is set so that files of an application may be shown to the user only in the application.

A unique Linux user ID is assigned to a specific application installed in a user's digital device to prevent other applications from accessing the specific application. A user ID is assigned when an application is installed in a digital device, and remains unchanged while it is present in the digital device. Since security is forced at the process level, it is generally known that the code within any two applications may not be executed in the same process. Therefore, they are executed with different Linux user IDs.

If two applications are assigned the same user ID and share it, each of them may access a file of the other. In this case, two applications are executed in the same Linux process, and share the same virtual machine.

In other words, in order for different applications to be executed in the same process, it is necessary to sign the applications using the same private key, define the properties of a manifest having the same value/name, and assign the same Linux user ID that uses a manifest file, to the applications.

All applications are required to be signed. Application or code signing is a process of providing a digital signature to a specified application using a private key to perform the following operations:
- identify code author;

### *14- detect a change in the application; and

### - build trust between applications.

Based on this trust relationship, applications may share code and data in a secure way. Applications, which are signed using the same digital signature, may share the rights to access signature-based Application Program Interface (API) with each other, and may be executed in the same process if they share the user ID, allowing access to the code and data of the other application.

A manifest file serves to specify the components required for execution of an application, specify a required specific library, and identify the right for adjustment of the permissions of the application. The components of an application may include an activity, a service, a broadcast receiver, and a content provider. The manifest file is a structured extensible Markup Language (XML) file, and exists in all applications in a file name of "AndroidManifest.xml."

In other words, by using the signatures of applications and the permissions defined in the manifest file, an application A may use an element of an application B, or the application B may use an element of the application A.

Applications are protected by default. Because applications are protected using a user ID, only a user having the same user ID can access the applications. As mentioned above, since applications share the same user ID, are signed using the same digital certificate, and are executed in the same process depending on the permissions defined in the manifest file, they share access to other applications.

However, the above-described conventional technology may has disadvantages. Applications are executed in a Java class of Java virtual machine since they are based on the Java programming language. Therefore, if DRM content is included in an application which is executed in a Java class, the Java class requests decryption of the DRM content from a DRM agent. In response, the DRM agent decrypts DRM content through an appropriate procedure, and delivers the decrypted content to the Java class.

### [Disclosure]

### [Technical Problem]

The Java class may forge application source code through de-compilation. Thus, a user ID or a signature may be fraudulently changed. Therefore, the original content (for example, decrypted content) of the DRM content may be leaked in the Java class. As a solution to this problem, the Obfuscator tool is used to make it difficult to analyze the classes, functions and parameter names, but that cannot completely protect Java code. In addition, if one obtains permissions by modifying an Android™ manifest file, which is a permission setting file for the Android™ platform, he or she may perform fraudulent acts. As a solution to this problem, the Android security mechanism is applied to the Android™ manifest file. However, the manifest file may be fraudulently modified, if the manifest file is recompiled after it is modified through de-compilation.

### [Technical Solution]

The present invention has been made to address at least the above-mentioned problems and/or disadvantages and to provide at least the advantages described below. Accordingly, an aspect of the present invention provide a method and apparatus for protecting applications in a more secure way.

Another aspect of the present invention is to provide a method and apparatus for making it impossible to extract original content for DRM content by fraudulently forging an application, to which DRM technology is applied, by performing Java de-compilation.

Another aspect of the present invention is to provide a method and apparatus for preventing an unauthorized digital device or user from fraudulently accessing DRM content.

In accordance with an aspect of the present invention, there is provided a method for protecting an application in a user digital device. The method includes downloading an application module and installing an application; receiving an execution request for the application; extracting authentication information from the application module; extracting an authentication element included in the application from the application; generating an authentication signature using the authentication element; comparing a reference authentication signature, included in the authentication information, with the generated authentication signature; and if the reference authentication signature is identical to the generated authentication signature, normally executing the application. In accordance with another aspect of the present invention, there is provided a user digital device for protecting an application. The user digital device includes a communication unit; a controller configured to download an application module through the communication unit, to install an application, and to install an authentication agent upon receiving an execution request for the application; and the authentication agent configured to extract authentication information from the application module, to extract an authentication element, included in the application, from the application, to generate an authentication signature using the authentication element, to compare a reference authentication signature, included in the authentication information, with the generated authentication signature, and to notify the controller of a successful authentication if the reference authentication signature is identical to the generated authentication signature. The controller normally executes the application upon receiving the notification of the successful authentication.

In accordance with another aspect of the present invention, there is provided a method for protecting an application in an application generation device. The method includes generating an application; extracting an initial authentication element included in the application; generating a reference authentication signature using the initial authentication element; inserting the reference authentication signature into the application; configuring an authentication agent installation module for installing an authentication agent for authenticating the application using the reference authentication signature in a user digital device in which the application is installed; configuring an application module including the application; and distributing the application module.

*29In accordance with another aspect of the present invention, there is provided an application generation device for protecting an application. The application generation device includes a communication unit; an application generator configured to generate an application; and an authentication information generator configured to extract an initial authentication element included in the application, to generate a reference authentication signature using the initial authentication element, and to transfer the reference authentication signature to the application generator.

The application generator inserts the reference authentication signature into the application, configures an authentication agent installation module for installing an authentication agent for authenticating the application using the reference authentication signature in a user digital device in which the application is installed, configures an application module including the application, and distributes the application module through the communication unit.

### [Advantageous Effects]

The present invention provides a method and apparatus for protecting applications in a more secure way.

In addition, the present invention provides a method and apparatus for making it impossible to extract original content for DRM content by fraudulently forging an application, to which DRM technology is applied, by performing Java de-compilation. Moreover, the present invention provides a method and apparatus for preventing an unauthorized digital device or user from fraudulently accessing DRM content.

### [Description of Drawings]

The above and other aspects, features and advantages of certain embodiments of the present invention will be more apparent from the following description taken in conjunction with the accompanying drawings, in which:
FIG. 1 illustrates a system to which an embodiment of the present invention is applicable;
FIG. 2 illustrates a structure of an application generation device according to an embodiment of the present invention;
FIGs. 3 and 4 illustrate an application generation process according to an embodiment of the present invention;
FIG. 5 illustrates a structure of a user digital device according to an embodiment of the present invention;
FIG. 6 illustrates a user digital device for execution of an application according to an embodiment of the present invention; and
FIGs. 7 and 8 illustrate an application execution process according to an embodiment of the present invention.

### [Best Mode]

The following description is made with reference to the accompanying drawings and is provided to assist in a comprehensive understanding of embodiments of the present invention as defined by the claims and their equivalents. It includes various specific details to assist in that understanding. However, it should be noted that these details are not intended to limit the present invention in any way. Accordingly, those of ordinary skilled in the art will recognize that various changes and modifications of the embodiments described herein can be made without departing from the scope and spirit of the present invention. In addition, descriptions of well-known functions and constructions may be omitted for clarity and conciseness.

The terms and words used in the following description and claims are not limited to their dictionary meanings, but, are merely used to enable a clear and consistent understanding of the invention. Accordingly, it should be apparent to those skilled in the art that the following description of embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present invention relates to protection of applications in the Android platform. More specifically, the present invention relates to preventing an unauthorized digital device or user from extracting the original content of the content to which DRM is applied, by fraudulently forging an application to which DRM is applied, through Java de-compilation, or from fraudulently accessing the DRM content.

To this end, when generating an application in the Android™ platform, an application generation device, according to an embodiment of the present invention, generates a reference authentication signature using an authentication element (i.e., an initial authentication element) included in the application. The authentication element is information that is included in an application, for protection of the application, and may be, for example, an application name, a signature of an executable file, a signature of a manifest file, etc. The application generation device distributes an application module that includes the generated reference authentication signature and the application. When an application is executed in a user's digital device that has downloaded the distributed application module, the user digital device generates an authentication signature by extracting an authentication element included in the application. The digital device extracts a reference authentication signature from the application, compares it with the generated authentication signature, and normally executes the application if they are identical to each other.

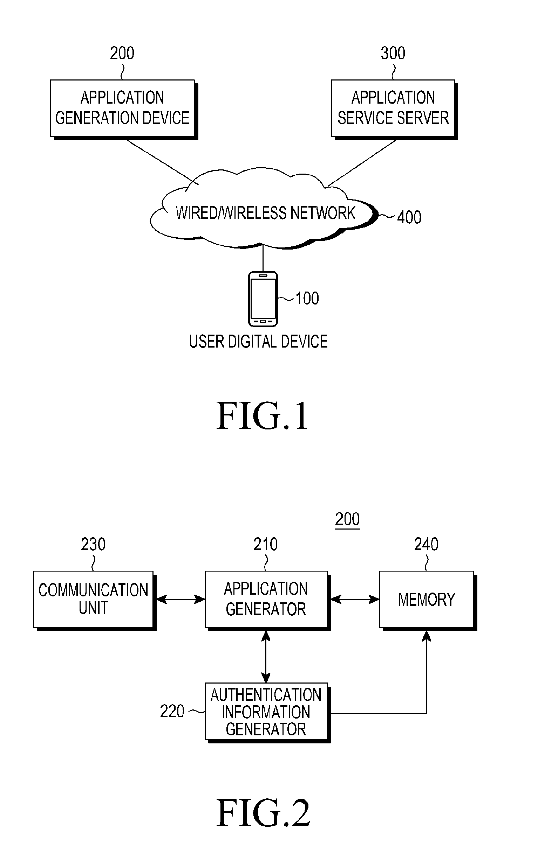

FIG. 1 illustrates an example of a system to which an embodiment of the present invention is applicable.

Referring to FIG. 1, the system includes an application generation device 200, an application service server 300, a user digital device 100, and a wired/wireless network 400.

The application generation device 200, which generates applications, supports the Android™ platform. The application generation device 200 distributes generated applications to the user digital device 100 through the application service server 300. The application service server 300 distributes the applications provided by the application generation device 200 to the user digital device 100 over the wired/wireless network 400 in accordance with conventional techniques.

The wired/wireless network 400 includes various wired/wireless networks such as, for example, mobile networks and Internet.

The user digital device 100, (i.e., a device for downloading, installing and executing applications) may include, for example, a cellular phone, a smart phone, a tablet Personal Computer (PC), and the like. The user digital device 100 is equipped with the Android™ platform.

In this system, the application generation device 200 may be configured as illustrated in FIG. 2 according to an embodiment of the present invention.

FIG. 2 illustrates a structure of the application generation device 200 according to an embodiment of the present invention.

Referring to FIG. 2, the application generation device 200 includes an application generator 210, an authentication information generator 220, a communication unit 230, and a memory 240.

The communication unit 230, under control of the application generator 210, transmits and receives data to/from external devices (not shown), for communication.

The memory 240 stores a program for control of the application generation device 200 and signals or data received from the outside. Alternatively, is the memory 240 may be used as a working storage for operations performed in the application generation device 200.

The application generator 210 controls the overall operation of the application generation device 200. In other words, the application generator 210 controls the authentication information generator 220, the communication unit 230, and the memory 240. In accordance with an embodiment of the present invention, the application generator 210 generates an application in the Android™ platform, and generates authentication information in cooperation with the authentication information generator 220 in an application generation process.

The authentication information generator 220, under control of the application generator 210, generates authentication information that the application generation device 200 will transmit together with the application. In other words, the authentication information generator 220 extracts an authentication element that the application generator 210 inserts into an application in a process of generating an application, and generates an authentication signature using the extracted authentication element. For a better understanding of the present invention, an authentication element included in an application in an application generation process is called an initial authentication element. The initial authentication element may be at least one of the information which is included in an application, for security of the application, and which varies when the application is modified through Java de-compilation. In an embodiment of the present invention, the initial authentication element may be an application name, a signature of an executable file, and a signature of a manifest file. In addition, the initial authentication element may be version information of the application. The authentication information generator 220 transfers authentication information, including the authentication signature, to the application generator 210. In accordance with another embodiment of the present invention, the authentication information may include the initial authentication element.

The application generator 210 inserts authentication information into an application, and configures an application module that includes an application and an authentication agent installation module. The authentication agent installation module is an installation module for allowing the user digital device 100, which downloads and executes an application, to install an authentication agent. The authentication agent is an agent, which extracts, after an application is installed in the user digital device 100, an authentication element included in the application at the time of application execution, and generates authentication information in the user digital device 100.

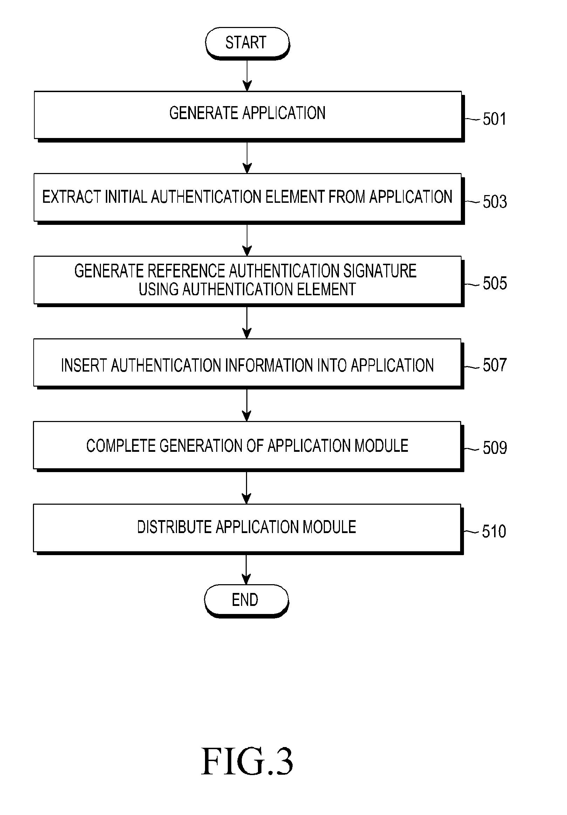

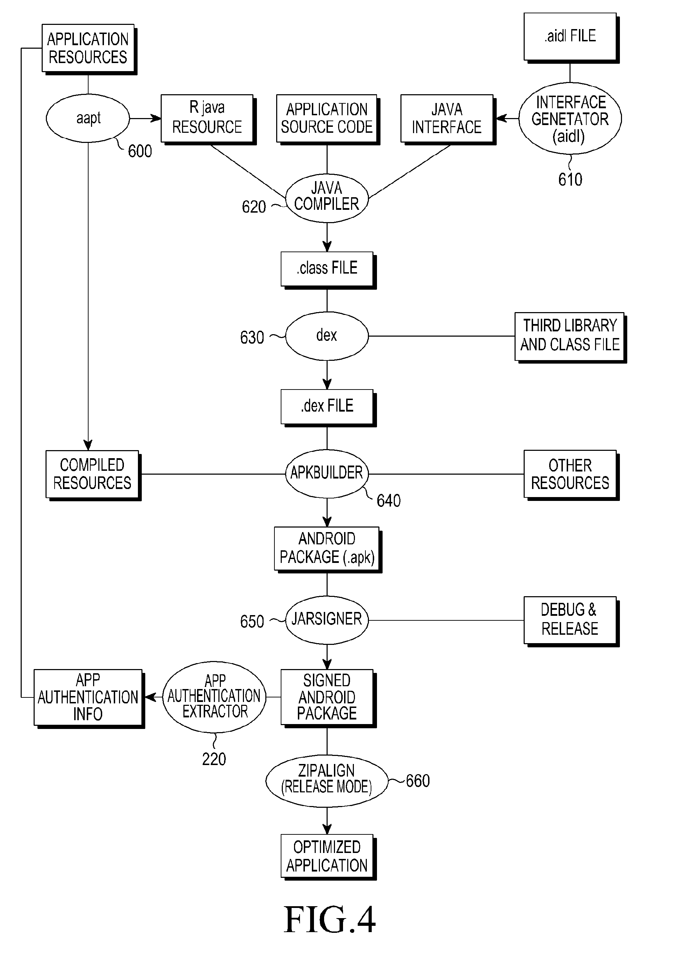

The application generator 210 provides the application module, including the application, to the application service server 300 through the communication unit 230. An operation of the application generation device 200 is illustrated in FIGs. 3 and 4. FIGs. 3 and 4 illustrate an application generation process according to an embodiment of the present invention.

Referring to FIG. 3, in step 501, the application generation device 200 generates an application. In step 503, the application generation device 200 extracts, from the application, an initial authentication element (for example, application's name, a signature for an executable file and a signature for a manifest file) that is inserted into the application in an application generation process.

Thereafter, in step 505, the application generation device 200 generates a reference authentication signature using the authentication element. In step 507, the application generation device 200 inserts into the application the authentication information that includes the reference authentication signature and the initial authentication element. In step 509, the application generation device 200 generates an application module including an authentication agent installation module and an application. Thereafter, in step 510, the application generation device 200 distributes the application module.

In an alternative embodiment of the present invention, in step 507, the application generation device 200 may insert only the reference authentication signature in the application as authentication information.

Reference will now be made to FIG. 4 to describe a process of generating an Android™ application according to an embodiment of the present invention. An Android™ application is created using the Java programming language. A file with an extension of '.pak' is created by compiling Java code for an application, packaging the compiled code in an Android™ package by an 'aapt' utility existing in the Android™ Software Development Kit (SDK), and compressing the packaged code into one archive file. This file is a file that ultimately allows the Android™ application to be distributed and installed. In other words, the file is a file that the user finally downloads and uses in the digital device. The code of one '.apk' file is considered one application. In the example of FIG. 4, it is assumed that authentication information includes a reference authentication signature and an initial authentication element.

In FIG. 4, 'appt' 600, an interface generator 'aidl' 610, a Java compiler 620, an executable file generator 'dex' 630, an Android™ package builder 'apkbuilder' 640, a signature device 'jarsigner' 650 and an optimization unit 'zipalign' 660 are included in the application generator 210 in FIG. 2.

Referring to FIG. 4, the 'appt' 600 generates R.Java resources and compiled resources from Java application resources. The interface generator 'aidl' 610 generates a Java interface from '.aidl' files. The Java compiler 620 outputs class files by compiling the R.Java resource, the application source code, and the Java interface. The executable file generator 'dex' 630 makes executable files '.dex' files using the class files and the third party libraries. The Android™ package builder 'apkbuilder' 640 packages the executable file '.dex file', the compiled resources and the other resources in an Android™ package '.apk'. A manifest file is also created and included in the Android™ package. The signature device 'jarsigner' 650 generates a signed Android™ package 'Signed .apk' by signing the Android™ package '.apk' through debug or release. In other words, the signature device 'jarsigner' 650 inserts a signature into each of the executable file '.dex Files' and the manifest file 'AndroidManifest.xml'. The optimization unit 'zipalign' 660 generates an optimized application by optimizing the signed Android™ package for the Android™ environment.

The authentication information generator (or App authentication extractor) 220 generates a reference authentication signature (or App Authentication Info) by extracting an initial authentication element from the signed Android™ package 'Signed .apk'. In other words, the authentication information generator (or App authentication extractor) 220 extracts a signature of the executable file '.dex Files', a signature of the manifest file 'AndroidManifest.xml' and the application's name from the signed Android™ package 'Signed .apk'. In addition, the authentication information generator (or App authentication extractor) 220 may extract the application's version information. The authentication information generator (or App authentication extractor) 220 generates a reference authentication signature (App Authentication Info) using the extracted signature of the executable files 'dex Files', the extracted signature of the manifest file 'AndroidManifest.xml' and the extracted application's name. In accordance with another embodiment of the present invention, the authentication information generator (or App authentication extractor) 220 may generate a reference authentication signature (App Authentication Info) using the application's version information in addition to the signature of the executable file '.dex Files', the signature of the manifest file 'AndroidManifest.xml' and the application's name.

The authentication information generator 220 configures authentication information including the reference authentication signature and the initial authentication element, and sends it to the application generator 210. An example of the authentication information according to an embodiment of the present invention is illustrated in Table 1 below.

**[Table 1]**

| Item | Description |
|---|---|
| Application Name(apk Package Name) | Unique identification value of application |
| Executable File's Signature (Dex Signature) | SHA1 signature (hash) value of executable file 'dex' of Java-compiled application |
| Manifest file's signature (Manifest Signature) | SHA1-Digest value of manifest file 'AndroidManifest.xml' |
| Reference authentication signature(App Authentication Signature) | Value obtained by RSA-signing apk Package Name, Dex Signature and Manifest Signature with private key of App Authentication Extractor |

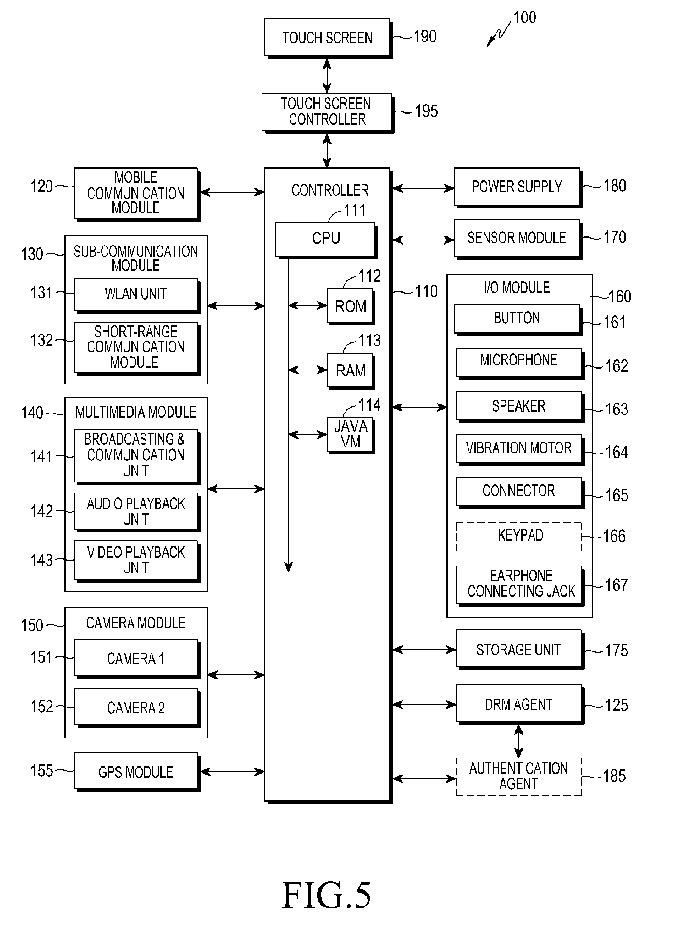

Next, a structure of the user digital device 100 according to an embodiment of the present invention will be described with reference to FIG. 5.

FIG. 5 illustrates a structure of a user digital device 100 according to an embodiment of the present invention.

Referring to FIG. 5, the user digital device 100 includes a touch screen 190, and a touch screen controller 195. Moreover, the user digital device 100 may include a controller 110, a mobile communication module 120, a sub-communication module 130, a multimedia module 140, a camera module 150, a GPS module 155, an input/output module 160, a sensor module 170, a storage unit 175, and a power supply unit 180. The sub-communication module 130 may include at least one of a wireless LAN module 131 and a near field communication module 132. The multimedia module 140 may include at least one of a broadcasting communication module 141, an audio play unit 142, and a video play unit 143. The camera module 150 may include at least one of a first camera 151 and a second camera 152. The input/output module 160 includes at least one of a button 161, a microphone 162, a speaker 163, a vibration motor 164, a connector 165, a keypad 166, and an earphone connecting jack 167. Also the user digital device 100 may include an authentication agent 185 for digital contents. The user digital device 100 according to the embodiment of the present invention also includes a DRM agent 125 for a DRM service.

Basically, the user digital device 100 includes controller 110, the DRM agent 125, and the authentication agent 185. Furthermore, the user digital device 100 includes at least one of the mobile communication module 120, the sub-communication module 130, the multimedia module 140, the camera module 150, the GPS module 155, the input/output module 160, the sensor module 170, the storage unit 175, the power supply unit 180, the touch screen 190, and the touch screen controller 195.

The controller 110 may include a CPU 111, a ROM 112, in which control programs for control of the electronic device 100 are stored, and a RAM 113 which stores signals or data input from the outside of the electronic device 100, or is used as a memory area for operations performed in the apparatus 100. Moreover, the controller 110 may be formed of a single core, a dual core, a triple core, or a quad core processor. The CPU 111, the ROM 112, and the RAM 113 may be connected with each other through an internal bus. Moreover, according to an embodiment of the present invention, the controller 110 may also include a Java virtual machine 114. The Java virtual machine 114 is software module which executes an Android™ application. The controller 110 may execute the Android™ application using the Java virtual machine 114.

The controller 110 controls the mobile communication module 120, the sub-communication module 130, the multimedia module 140, the camera module 150, the GPS module 155, the input/output module 160, the sensor module 170, the storage unit 175, the power supply unit 180, the touch screen 190, and the touch screen controller 195.

The mobile communication module 120 allows the electronic device 100 to be connected with the external device through mobile communication by using at least one antenna (not shown) or a plurality of antennas (not shown) under the control of the controller 110. The mobile communication module 120 transmits/receives wireless signals for a voice call, a video call, a short message service (SMS), or a multimedia message service (MMS) to/from a cell phone (not shown), a smart phone (not shown), a tablet PC (not shown), or other devices (not shown), having phone numbers which are input to the electronic device 100.

The sub-communication module 130 may include at least one of the wireless LAN module 131, and the near field communication module 132. For example, the sub-communication module 130 may include only the wireless LAN module 131, only the near field communication module 132, or both the wireless LAN module 131 and the near field communication module 132.

The wireless LAN module 131 may be connected to the internet, at the place where the wireless access point (AP) (not shown) is installed, under the control of the controller 100. The wireless LAN module 131 supports a wireless LAN protocol (IEEE802.11x) of the Institute of Electrical and Electronics Engineers (IEEE). The wireless LAN module 131 may drive a Wi-Fi positioning system (WPS) for identifying positional information of a terminal including the wireless LAN module 131, by using the positional information which the wireless access point (AP) in wireless connection with the wireless LAN module 131 provides.

The near field communication module 132 may perform near field communication in a wireless manner between the electronic device 100 and an image forming device (not shown) under the control of the controller 110. The near field communication method may include Bluetooth, infrared data association (IrDA), Wi-Fi direct communication, and near field communication (NFC).

The electronic device 100 may include at least one of the mobile communication module 120, the wireless LAN module 131, and the near field communication module 132 according to the performance thereof. For example, the electronic device 100 may include combinations of the mobile communication module 120, the wireless LAN module 131, and the near field communication module 132 according to the performance thereof.The multimedia module 140 may include the broadcasting communication module 141, the audio play module 142, and/or the video play module 143. The broadcasting communication module 141 may receive a broadcasting signal (for example, a TV broadcasting signal, a radio broadcasting signal, or a data broadcasting signal), and broadcasting additional information (for example, Electric Program Guide (EPG), or Electric Service Guide (ESG)), which have been transmitted from a broadcasting station through a broadcasting communication antenna, under the control of the controller 110. The audio play module 142 may play digital audio files (for example, files with an extension such as mp3, wma, ogg, and wav) which are stored or received under the control of the controller 110. The video play module 143 plays digital video files (for example, files with an extension such as mpeg, mpg, mp4, avi, mov, and mkv) which are stored or received under the control of the controller 110. The video play module 143 may also play the digital audio files.

The multimedia module 140 may include the audio play module 142, and the video play module 143, except for the broadcasting communication module 141. Moreover, the audio play module 142 or the video play module 143 of the multimedia module 140 may be included in the controller 110.

The camera module 150 may include at least one of the first camera 151 and the second camera 152 for photographing still images and videos under the control of the controller 110. Moreover, the first camera 151 and the second camera 152 may include a sub-light source (for example, a flash (not shown)) for providing a needed quantity of light for the photography. The first camera 151 may be disposed on a front surface of the apparatus 100, and the second camera 152 may be disposed on a rear surface of the apparatus 100. Otherwise, the first camera 151 and the second camera 152 may be disposed adjacent to each other (for example, an interval between the first camera 151 and the second camera 152 is longer than a distance of 1 cm, and smaller than a distance of 8 cm) to photograph three dimensional still images or three dimensional videos.

The GPS module 155 may receive electric waves from a plurality of GPS satellites (not shown) in earth orbit, and may calculate a location of the electronic device 100 by using the arrival times of the electric waves from the GPS satellites (not shown) to the electronic device 100.

The input/output module 160 may include at least one of a plurality of buttons 161, the microphone 162, the speaker 163, the vibratory motor 164, the connector 165, and the keypad 166.

The buttons 161 may be formed on a front surface, a side surface, or a rear surface of a housing of the electronic device 100, and may include at least one of a power/lock button (not shown), a volume button (not shown), a menu button, a home button, a back button, and a search button 161.

The microphone 162 receives voices or sounds to generate electric signals under the control of the controller 110.

The speaker 163 may output sounds corresponding to various signals (for example, a wireless signal, a broadcasting signal, a digital audio file, a digital video file, or photography) of the mobile communication module 120, the sub-communication module 130, the multimedia module 140, or the camera module 150, to the outside under the control of the controller 110. The speaker 163 may output sounds (for example, a button operation tone corresponding to a telephone call, or a call connection tone) corresponding to functions which the apparatus 100 performs. One or a plurality of speakers 163 may be formed at a proper location or locations of the housing of the apparatus 100.

The vibratory motor 164 may convert an electric signal into a mechanical vibration under the control of the controller 110. For example, when receiving a voice call from another device (not shown), the apparatus 100 in a vibratory mode operates the vibratory motor 164. One or a plurality of vibratory motors 164 may be formed in the housing of the apparatus 100. The vibratory motor 164 may operate in response to a touch of a user on the touch screen 191, and a continuous movement of a touch on the touch screen 191.

The connector 165 may be used as an interface for connecting the electronic device 100 with the external device (not shown) or a power source (not shown). The electronic device 100 may transmit data stored in the storage unit 175 of the electronic device 100 to the external device (not shown), or may receive data from the external device (not shown) through a wired cable connected to the connector 165 under the control of the controller 110. Moreover, the electronic device 100 may receive an electric power from the power source (not shown) through the wired cable connected to the connector 165, or may charge a battery (not shown) by using the power source.

The keypad 166 may receive a key input from the user for the control of the apparatus 100. The keypad 166 includes a physical keypad (not shown) formed in the electronic device 100, or a virtual keypad (not shown) displayed on the touch screen 191. The physical keypad formed in the electronic device 100 may be excluded according to the performance or the structure of the electronic device 100.

The sensor module 170 includes at least one sensor for detecting the state of the electronic device 100. For example, the sensor module 170 may include a proximity sensor for detecting a user's access to the apparatus 100, an illumination sensor (not shown) for detecting a quantity of light around the electronic device 100, a motion sensor (not shown) for detecting motion (for example, rotation of the electronic device 100, and acceleration or vibration applied to the electronic device 100) of the apparatus 100, a geo-magnetic sensor (not shown) for detecting a point of a compass by using earth's magnetic field, a gravity sensor for detecting a direction of gravity, and an altimeter for detecting an altitude by measuring atmospheric pressure. At least one sensor may detect the state, generate a signal corresponding to the detection, and transmit the signal to the controller 110. The sensor of the sensor module 170 may be added or omitted according to the performance of the electronic device 100.

The power supply unit 180 may supply an electric power to one or a plurality of batteries (not shown) disposed in the housing of the electronic device 100. The one or the plurality of batteries (not shown) supplies the electric power to the electronic device 100. Moreover, the power supply unit 180 may supply the electric power, which is input from an external power source (not shown) through the wired cable connected with the connector 165, to the electronic device 100. Furthermore, the power supply unit 180 may also supply the electric power, which is input in a wireless manner from the external power source through a wireless charging technology, to the electronic device 100.

The storage unit 175 may store the signal or the data, which is input and output to correspond to operations of the mobile communication module 120, the sub-communication module 130, the multimedia module 140, the camera module 150, the GPS module 155, the input/output module 160, the sensor module 170, and the touch screen 191, under the control of the controller 110. The storage unit 175 may store control programs for the control of the electronic device 100 or the controller 110, or applications.

The term referred to as "storage unit" is used with the meaning including the storage unit 175, the ROM 112 and the RAM 113 in the controller 110, or a memory card (not shown) (for example, an SD card, and a memory stick) which is mounted to the apparatus 100. The storage unit may include a nonvolatile memory, a volatile memory, a hard disk drive (HDD), or a solid state drive (SSD).

In accordance with an embodiment of the present invention, the storage unit 175 stores a downloaded application module.

The touch screen 190 may provide user interfaces corresponding to various services (for example, telephone calls, data transmission, broadcasting, and photography) to the user. The touch screen 190 may transmit an analog signal, corresponding to at least one touch which is input to the user interface, to the touch screen controller 195. The touch screen 190 may receive the at least one touch through the user's body (for example, fingers including a thumb), or a touchable input means (for example, a stylus pen). Moreover, the touch screen 190 may receive a continuous movement of the at least one touch. The touch screen 190 may transmit an analog signal corresponding to the continuous movement of the input touch to the touch screen controller 195.

The DRM agent 125 is a software component for controlling an operation of applying DRM while playing content (hereinafter, referred to as 'DRM content') to which DRM technology is applied. The DRM agent 125 requests a license related to specific DRM content through the mobile communication unit 120, analyzes the received license, decrypts the DRM content, and transfers the decrypted DRM content to a function unit (for example, the multimedia unit 140) for playing DRM content, or the controller 110. Although the DRM technology is given as an example of the security technology for digital content in the embodiment of the present invention, the present invention may be applied to other security technologies and not only the DRM technology. In this case, a security agent supporting another security technology may be included in the user digital device 100 instead of the DRM agent 125.

An authentication agent 185 performs authentication for an application. Upon a user's request, the controller 110 may download an Android™ application module from the application service server 300 through the mobile communication unit 120 or the sub-communication unit 130, and install it in the user digital device 100. The application module includes an application and an authentication agent installation module. When the downloaded Android™ application is executed by the Java virtual machine 114 in the controller 110 after it is installed in the user digital device 100, the Java virtual machine 114 installs the authentication agent 185 in the user digital device 100 using the authentication agent installation module included in the application module.

The authentication agent 185 extracts an authentication element included in the application at an appropriate time, and generates an authentication signature. The authentication agent 185 extracts a reference authentication signature from the application, compares it with the generated authentication signature, and normally executes the application if the reference authentication signature and the generated authentication signature are identical to each other. The type of the authentication element extracted by the authentication agent 185 is the same as the type of the initial authentication element that the authentication agent 185 uses when generating the reference authentication signature. In other words, if the initial authentication element used to generate the reference authentication signature includes an application's name, a signature of an executable file and a signature of a manifest file, then the authentication agent 185 extracts the application's name, the signature of an executable file and the signature of a manifest file from the application. Alternatively, if the initial authentication element used to generate the reference authentication signature includes the application's version information in addition to the above three types of initial authentication elements, then the authentication agent 185 also extracts the version information from the application.

Application authentication by the authentication agent 185 may be performed at various points of time in the application execution process. For example, the authentication agent 185 may authenticate the application when execution of the application is started. Alternatively, if the authentication agent 185 needs to authenticate the application while the application is being executed, the controller 110 may authenticate the application by means of the authentication agent 185. For example, after starting the application, the authentication agent 185 may authenticate the application at a time when it is to begin playing specific content, which is included in the application and to which the security technology is applied.

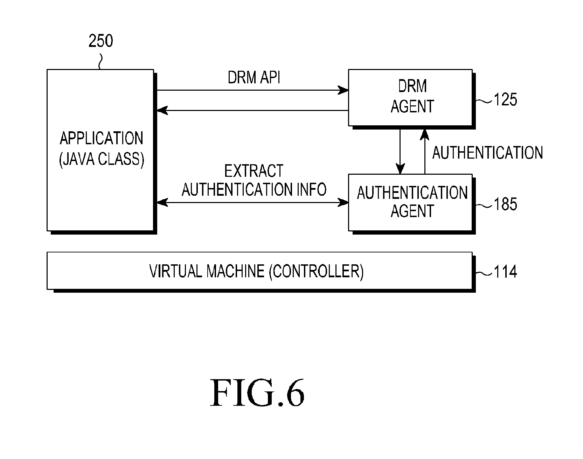

In FIG. 5, the DRM technology is assumed to be the utilized security technology. Therefore, the controller 110 authenticates the application in cooperation with the authentication agent 185 and the DRM agent 125. In this case, an operational structure of the user digital device 100 is illustrated in FIG. 6.

Referring to FIG. 6, upon receiving an application execution request from the user, the controller 110 of the user digital device 100 executes an application 250 using the Java virtual machine 114. The application 250 is executed in the Java class. The Java virtual machine 114 installs the authentication agent 185 when executing the application 250. Thereafter, if the DRM content included in the application 250 needs to be consumed while the application 250 is being executed, the Java class of the Java virtual machine 114 requests decryption of the DRM content from the DRM agent 125.

Before decrypting the DRM content, the DRM agent 125 requests the authentication from the authentication agent 185.

The authentication agent 185 generates an authentication signature by extracting authentication information from the application 250. The authentication agent 185 extracts a reference authentication signature from the application 250, compares the reference authentication signature with the generated authentication signature, and transfers the comparison results to the DRM agent 125. In other words, the authentication agent 185 transfers 'successful authentication' to the DRM agent 125 if the two authentication signatures are identical to each other, and transfers 'authentication failure' to the DRM agent 125 if the two authentication signatures are not identical to each other.

Upon receiving the 'successful authentication', the DRM agent 125 decrypts DRM content and transfers it to the Java class of the Java virtual machine 114. Accordingly, the next stage of the application 250 is normally executed.

However, upon receiving the 'authentication failure', the DRM agent 125 transfers 'Unable To Decrypt DRM Content' to the Java class of the Java virtual machine 114.

Accordingly, the execution of the application 250 is interrupted, and the Java virtual machine 114 displays a message indicating 'unable to execute application', or generates an alert tone.

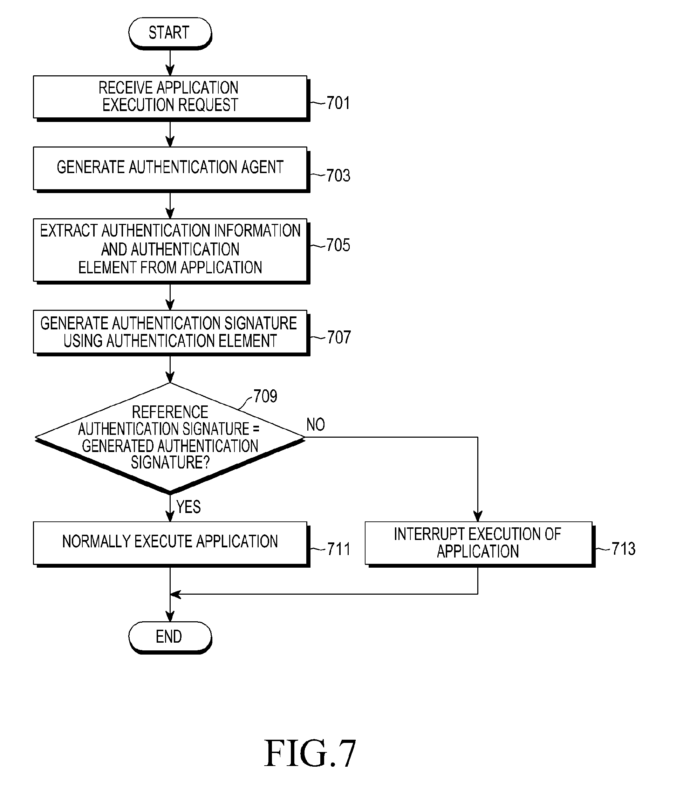

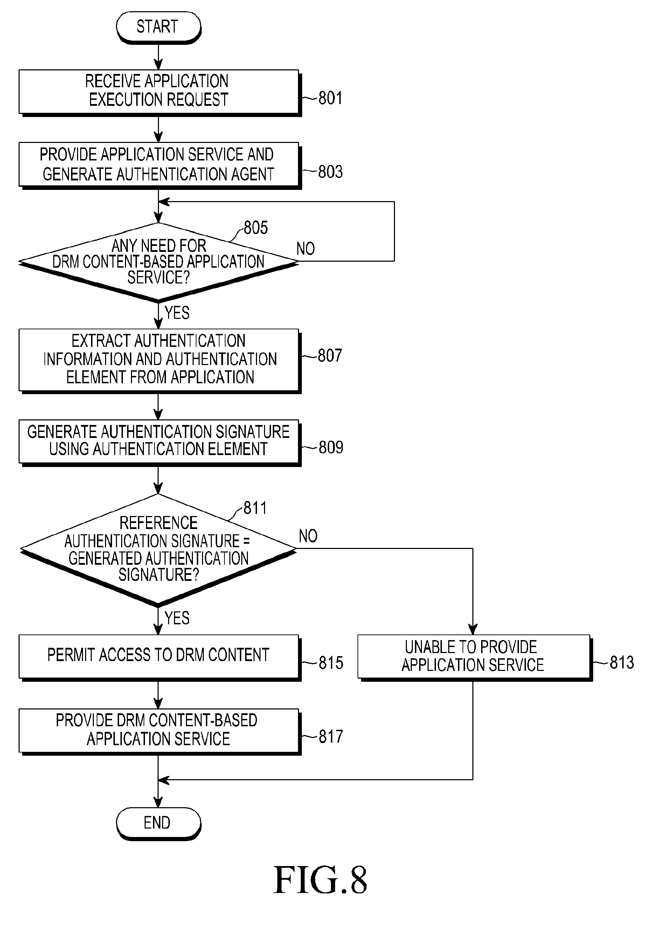

This operation of the user digital device 100 is illustrated in FIGs. 7 and 8. FIG. 7 illustrates a method of performing authentication for an application at the time of starting the application according to an embodiment of the present invention. FIG. 8 illustrates an example of performing authentication for an application at the time the playback of specific content (for example, DRM content), to which security is applied, is required, during execution of the application, according to another embodiment of the present invention.

The controller 110 of the user digital device 100 may receive an installation request for a specific application from the user through the I/O module 160 or the touch screen 190. In response, the controller 110 downloads a specific application module through the mobile communication module 120 or the sub-communication module 130. The specific application module includes a specific application and an authentication agent installation module. The controller 110 of the user digital device 100 installs the specific application using the Java virtual machine 114.

For a better understanding of the present invention, it will be assumed in FIG. 7 that the specific application is a photo editing application, in which only the reference authentication signature is inserted as authentication information. Also, it will be assumed in FIG. 8 that the specific application is a game application, and only the reference authentication signature is inserted as authentication information of the game application.

Referring first to FIG. 7, in step 701, the user digital device 100 receives a photo editing application execution request from the user through the I/O module 160 or the touch screen 190. In step 703, in response to the request, the Java virtual machine 114 in the controller 110 generates the authentication agent 185 using an authentication agent installation module included in a photo editing application module.

In step 705, the authentication agent 185 extracts authentication information from the photo editing application. The authentication information is information that is inserted into the photo editing application during creation of the photo editing application, and may include a reference authentication signature. In step 705, the authentication agent 185 extracts not an initial authentication element included in the authentication information, but an authentication element included in the photo editing application itself. The extracted authentication element may be, for example, an application's name, a signature of an executable file, and/or a signature of a manifest file. Thereafter, in step 707, the authentication agent 185 generates an authentication signature using the extracted authentication element. In step 709, the authentication agent 185 compares the reference authentication signature with the authentication signature generated in step 707, to determine whether the reference authentication signature and the authentication signature generated in step 707are identical to each other.

If the photo editing application is not fraudulently modified, each authentication element extracted in step 705 is identical to a corresponding initial authentication element that is inserted into the photo editing application by the application generation device 200 during creation of the photo editing application. Accordingly, the authentication signature generated by the authentication agent 185 will be the same as the reference authentication signature.

On the other hand, if the photo editing application is fraudulently modified, values of the initial authentication element, which was inserted into the photo editing application by the application generation device 200, may be different. In other words, each authentication element extracted in step 705 will be different from the initial authentication element of the photo editing application. Accordingly, the authentication signature generated by the authentication agent 185 will be different from the reference authentication signature.

If it is determined in step 709 that the reference authentication signature is identical to the authentication signature generated in step 707, the authentication agent 185 notifies the Java virtual machine 114 in the controller 110 of 'successful authentication', making it possible to normally execute the photo editing application in step 711. On the other hand, if the authentication signatures are not identical to each other, the authentication agent 185 notifies the Java virtual machine 114 in the controller 110 of 'authentication failure', interrupting the execution of the photo editing application in step 713. Notification of and reasons for the interrupted execution of the application may be displayed on the touch screen 190.

Next, reference will be made to FIG. 8 to describe a process of performing authentication for an application at the time the playback of DRM content is required, during execution of the application, according to another embodiment of the present invention. It will be assumed in FIG. 8 that the specific application is a game application, and only the reference authentication signature is inserted as authentication information of the game application.

Referring to FIG. 8, in step 801, the user digital device 100 receives a game application execution request from the user through the I/O unit 160 or the touch screen 190. In step 803, in response to the request, the Java virtual machine 114 in the controller 110 executes the game application and generates the authentication agent 185 using an authentication agent installation module included in a game application module. Thereafter, if it is determined in step 805 that there is a need for DRM content-based application service during the execution of the game application, the Java virtual machine 114 requests decryption of the DRM content from the DRM agent 125. For example, a predetermined time period from the beginning of the game serviced by the game application may be a period in which the game application is executed without application of DRM, while the period after the predetermined time period may be a period in which the content, to which DRM is applied, is played.

Accordingly, the DRM agent 125 requests authentication for the application from the authentication agent 185. In step 807, in response to the request, the authentication agent 185 extracts authentication information from the game application. The authentication information is information that is inserted into the game application during creation of the game application, and may include a reference authentication signature. In step 807, the authentication agent 185 also extracts not an initial authentication element included in the authentication information, but an authentication element included in the game application itself. The extracted authentication element may be, for example, the application's name, a signature of an executable file, and/or a signature of a manifest file.

Thereafter, in step 809, the authentication agent 185 generates an authentication signature using the extracted authentication element. In step 811, the authentication agent 185 compares the reference authentication signature with the authentication signature generated in step 809, to determine whether they are identical to each other. If the game application is not fraudulently modified, each authentication element extracted in step 807 is identical to a corresponding initial authentication element that is inserted into the game application by the application generation device 200 during creation of the game application. Accordingly, the authentication signature generated by the authentication agent 185 will be the same as the reference authentication signature.

On the other hand, if the game application is fraudulently modified, values of the initial authentication element, which was inserted into the game application by the application generation device 200, may be different. In other words, each authentication element extracted in step 807 will be different from the initial authentication element of the game application. Accordingly, the authentication signature generated by the authentication agent 185 will be different from the reference authentication signature. If it is determined in step 811 that the reference authentication signature is identical to the authentication signature generated in step 809, the authentication agent 185 notifies the DRM agent 125 of 'successful authentication', permitting access to the DRM content in step 815. Accordingly, in step 817, the DRM agent 125 decrypts the DMR content and transfers it to the Java virtual machine 114 in the controller 110. The Java virtual machine 114 in the controller 110 continuously provides the DRM content-based application service, or the game application.

On the other hand, if the authentication signatures are not identical to each other, the authentication agent 185 notifies the DRM agent 125 of 'authentication failure', disallowing access to the DRM content in step 813. Accordingly, the DRM agent 125 notifies the Java virtual machine 114 in the controller 110 of 'unable to access DRM content'. Accordingly, the Java virtual machine 114 displays a message indicating 'Unable To Provide Game Application Service' on the touch screen 190.

As is apparent from the foregoing description, the present invention provides a method and apparatus for protecting applications in a more secure way. In addition, the present invention provides a method and apparatus for making it impossible to extract original content for DRM content by fraudulently forging an application, to which DRM technology is applied, by performing Java de-compilation. Moreover, the present invention provides a method and apparatus for preventing an unauthorized digital device or user from fraudulently accessing DRM content.

While the invention has been shown and described with reference to certain embodiments thereof, it will be understood by those skilled in the art that various changes in form and details may be made therein without departing from the spirit and scope of the invention as defined by the appended claims and their equivalents.

## Claims

1. A method for protecting an application in a user digital device, comprising:
downloading an application module and installing an application;
receiving an execution request for the application;
extracting authentication information from the application module;
extracting an authentication element included in the application from the application;
generating an authentication signature using the authentication element;
comparing a reference authentication signature, included in the authentication information, with the generated authentication signature; and
if the reference authentication signature is identical to the generated authentication signature, executing the application.

2. The method of claim 1, further comprising:
interrupting the execution of the application, if the reference authentication signature is different from the generated authentication signature.

3. The method of claim 1, further comprising:
upon receiving the execution request for the application, installing an authentication agent using an authentication agent installation module included in the application module.

4. The method of claim 1, wherein the reference authentication signature is generated using an initial authentication element included in the application in a process of generating the application.

5. The method of claim 1, wherein the authentication element includes a signature of an executable file, a signature of a manifest file, and a name of the application, all of which are included in the application.

6. The method of claim 1, wherein the comparison is performed at a time when the execution request for the application occurs.

7. The method of claim 1, wherein the comparison is performed at a time when an application service based on Digital Rights Management (DRM) content included in the application is needed after the application is executed in response to the execution request for the application.

8. The method of claim 7, further comprising:
if the reference authentication signature is identical to the generated authentication signature, decrypting the DRM content and providing an application service based on the DRM content.

9. The method of claim 8, further comprising:
if the reference authentication signature is different from the generated authentication signature, outputting a message indicating 'Unable To Access DRM Content'.

10. A user digital device for protecting an application, comprising:
a communication unit;
a controller configured to download an application module through the communication unit, install an application, and install an authentication agent upon receiving an execution request for the application; and
the authentication agent configured to extract authentication information from the application module, extact an authentication element included in the application from the application, generate an authentication signature using the authentication element,
compare a reference authentication signature included in the authentication information with the generated authentication signature, and notify the controller of successful authentication if the reference authentication signature is identical to the generated authentication signature;
wherein the controller normally executes the application upon detecting the notification of the successful authentication.

11. The user digital device of claim 10, wherein the controller installs the authentication agent using an authentication agent installation module included in the application module.

12. The user digital device of claim 10, wherein the reference authentication signature is generated using an initial authentication element included in the application in a process of generating the application.

13. The user digital device of claim 10, wherein the authentication element includes a signature of an executable file, a signature of a manifest file, and a name of the application, all of which are included in the application.

14. The user digital device of claim 10, wherein the authentication agent generates the reference authentication signature at a time when the execution request for the application occurs, and compares the reference authentication signature with the generated authentication signature.

15. The user digital device of claim 10, further comprising:
a Digital Rights Management (DRM) agent,
wherein the controller requests decryption of DRM content from the DRM agent at a time when an application service based on the DRM content included in the application is needed after the application is executed in response to the execution request for the application;
wherein the DRM agent requests authentication for the application from the authentication agent in response to the decryption request for the DRM content; and
wherein in response to the authentication request for the application, the authentication agent generates the reference authentication signature at a time when the execution request for the application occurs, and compares the reference authentication signature with the generated authentication signature.
